# EUROPÄISCHE PATENTANMELDUNG

(11) **EP 0 744 261 A1**
(43) Veröffentlichungstag der Anmeldung: **27.11.1996**
(21) Anmeldenummer: 96107665.0
(22) Anmeldetag: 14.05.1996
(51) Int. Cl.: B29B 17/00, B32B 9/02, B32B 21/10, B29C 70/08

(54) **Verbundbauteil, insbesondere Verbundverkleidungsteil und Verfahren zur Herstellung dieses Bauteils**

(30) Priorität: 28.09.1995 DE 19536074; 21.05.1995 DE 19518186
(71) Anmelder: Möller Plast GmbH, 33649 Bielefeld (DE)
(72) Erfinder: Beckmann, Friedhelm, 32120 Hiddenhausen (DE); Hesch, Rolf, Prof. Dr., 32657 Lemgo (DE)
(74) Vertreter: Schirmer, Siegfried, Dipl.-Ing.

(57) **Zusammenfassung**

Bei dem erfindungsgemäßen Verbundbauteil besteht das Verstärkungsmaterial ganz oder teilweise aus recycelten Naturfasern, insbesondere Jute- oder Sisalfasern, die aus Transportgeweben gebildet sind. Diesen Recyclingfasern können zwischen 10 % bis 30 % andere Faserwerkstoffe oder Füllstoffe zugemischt werden. Das als Verstärkungseinlage dienende Naturfasermaterial wird ungerichtet, wirr, gerichtet, geformt oder vorgeformt eingebracht. Dabei sind auch Kombinationsmöglichkeiten durch Schichtenbildung der Verstärkungseinlage möglich.

Als Bindestoff werden thermoplastische synthetische Rohstoffe oder Duroplaste oder eine Kombination aus Duroplasten und Thermoplasten oder ein biologischer Wirkstoff eingesetzt.

Erfindungsgemäß wird das Ausgangsmaterial in Stücke von fließfähiger Konsistenz vorzerkleinert und diese Stücke in einer Mühle zerfasert.

## Beschreibung

Die Erfindung betrifft ein Verbundbauteil, insbesondere Verbundverkleidungsteil, unter Verwendung eines Bindewerkstoffs mit einem Verstärkungsmaterial aus Naturfasern sowie ein Verfahren zur Herstellung dieses Bauteils.

Verkleidungsteile der beschriebenen Art werden in unterschiedlichen Industriebereichen eingesetzt und sollen neben der optischen Funktion gute mechanische Eigenschaften aufweisen. Hierzu gehören eine hohe Formstabilität sowie ein günstiges Temperaturverhalten. Darüber hinaus wird eine begrenzte Feuchtigkeitsaufnahme sowie ein möglichst geringes Gewicht gefordert. Wegen der oft komplexen Oberflächengeometrie wird ein hoher Freiheitsgrad bei dem Formgebungsprozeß erwartet. Die Oberfläche wird mit dekorativen Folienmaterialien auf Basis PVC, PVC/ABS, PUR, TPO usw. sowie Dekormaterialien auf Basis von Textilien, Teppich und Leder versehen. Der Gesamtaufbau soll ein Mindestmaß an schall- und/oder wärmedämmenden Eigenschaften aufweisen und nach einem recyclingfreundlichen Konzept herstellbar sein.

Nach dem bisherigen Stand der Technik werden derartige Verkleidungsteile als Vollkunststoffteile oder als faserverstärkte Preßteile hergestellt. Diese bestehen entweder aus Holzfaserwerkstoffen mit einem duroplastischen Bindemittel oder aus thermoplastischen Spritzgieß-/Preßteilen mit Verstärkungseinlagen aus synthetischen oder natürlichen Fasermaterialien. Die Holzfaserwerkstoffe weisen nur eingeschränkte mechanische Eigenschaften auf. Der Einsatz von synthetischen Verstärkungsfasern führt zu einer Belastung des Arbeitsbereichs und zu gesundheitlichen Risiken. Der Einsatz von Naturfasern führt bedingt durch die verschiedenen Aufbereitungsmethoden zu Qualitätsschwankungen sowie aufgrund der noch geringen Verfügbarkeit und der gestiegenen Nachfrage zu einer hohen Kostenbelastung.

Ein bekanntes Produktionsverfahren sieht das Hinterschäumen von einem vorgeformten Dekorteil vor. Hierbei handelt es sich um ein mehrstufiges und damit kostenaufwendiges Verfahren, wobei der vernetzte Schaum zu erheblichen Recyclingproblemen führt. Im DE-Gebrauchsmuster G 93 01 022.2 ist ein Innenverkleidungselement beschrieben, das aus einem Holzfaserverbundwerkstoff besteht, in einem ersten Schritt räumlich verformt, und in einem weiteren Verfahrensschritt mit einem Dekormaterial beschichtet wird. Dieser mehrstufige Ablauf ist aufwendig, das Eigenschaftsniveau grenzt die universelle Einsetzbarkeit ein. In der DE 41 19 295 A1 wird u. a. der Einsatz von Jutefasern, -fäden und -geweben beschrieben. Diese Materialien sind im Vergleich zur Recyclingjute teuer und führen bei großen Zugabemengen zu erheblichen Kostennachteilen. In der DE 42 29 078 A1 wird der Einsatz einer Recyclingjutefaser als Zusatz bei der Asphaltherstellung beschrieben. Die Faserlänge wird mit max. 4 mm, vorzugsweise 1 bis 2 mm angegeben.

Diese Faserlängen sind deutlich zu kurz, um eine ausreichende Verstärkung/Stabilisierung zu gewährleisten. Gerade die Herstellung eines längeren Faserprodukts ist die Voraussetzung zur Herstellung hochbeanspruchter Verkleidungsteile.

Aus der DE 41 39 257 A1 ist eine Recycling-Kunststoffformmasse bekannt, der zur Erhöhung der Festigkeit Verstärkungsfasern beigemischt werden, wobei die Verstärkungsfasern aus Glasfasern gebildet sind. Die Faserlängen sollen zwischen 1,25 mm und 4,5 mm liegen. Mit einer solchen Faserlänge ist keine ausreichende Stabilisierung zu erreichen.

Der Erfindung liegt die Aufgabe zugrunde, ein Verbundbauteil, insbesondere ein Verbundverkleidungsteil, zu schaffen, das kostengünstig herstellbar ist bei Gewährleistung einer den gestellten Anforderungen genügenden Festigkeit.

Diese Aufgabe wird erfindungsgemäß durch ein ganz oder teilweise aus recycelten Naturfasern, insbesondere Jute- oder Sisalfasern, gebildetes Verstärkungsmaterial gelöst. Dabei können die Gesamtkosten für das Verbundbauteil deutlich gesenkt werden, wenn recycelte Jute-/Sisalfasern eingesetzt werden, die aus der Aufbereitung von Verpackungsmaterialien stammen. Die Verfügbarkeit dieser Produkte ist weltweit in ausreichender Menge gegeben. So zählt die Jutefaser zu dem nach der Baumwollfaser am häufigsten angebauten Naturfaserprodukt. Die Fasern verhalten sich CO₂-neutral und liegen im Verpackungsbereich für den weiteren Einsatz bereits in einer günstigen Ausgangsform vor. Das Ausgangsprodukt ist jedoch zu grobfaserig und würde bei der weiteren Verarbeitung zu Dosierproblemen sowie in schwierigen Konturbereichen zu einer Entmischung zwischen Fasermaterial und Bindeharzsystem führen. Diese Fasern werden deshalb ausgehend von den Gewebestrukturen zunächst in einem mehrstufigen Prozeß zu Fasern mit einer Faserlänge von 2 mm bis 100 mm aufbereitet und als Einzelfasern oder einem hieraus hergestellten Gewebeverbund mit einem Bindeharzsystem zu einem Trägerteil verformt. Zur Variation der mechanischen Eigenschaften können den Jute-/Sisalfasern auch geringe Mengen (10 % bis 30 %) anderer Naturfasern wie Flachs, Hanf, Ramie, Kenaf, Chinaschilf, Baumwolle oder Kokus sowie Füllstoffe wie Holzfasern oder Schäben zugegeben werden.

Die Verarbeitung kann hierbei im Spritzgieß- oder Preßverfahren erfolgen. Das als Verstärkungseinlage dienende Naturfasermaterial kann dabei ungerichtet, wirr, gerichtet, geformt oder vorgeformt eingebracht werden. Dabei sind auch Kombinationsmöglichkeiten durch Schichtenbildung der Verstärkungseinlage möglich. In einer weiteren Ausführungsform wird das zur Dekorseite liegende Verstärkungsmaterial aus Kurzfasern und eine zweite Schicht aus gerichteten oder ungerichteten Langfasern gebildet. Dabei weisen die Kurzfasern vorzugsweise eine Länge zwischen 2 mm und 10 mm auf, die Langfasern eine Länge zwischen 10 mm und 100 mm. Als Bindeharz werden dabei vornehmlich Materialien auf Basis von Naturstoffen (Stärkeprodukte, PHB, CA, CAB, PU, PHA, PHB, PCL usw.), thermoplastische Werkstoffe (z. B. PP, ABS, PC/ABS, PA, PET) sowie duroplastische Systeme (z. B. Epoxydharz) sowie Kombinationen von Duro- und Thermoplasten eingesetzt. Zweckmäßigerweise ist ein träge reagierender Duroplast zu verwenden, der so eingestellt ist, daß er erst nach erfolgter Verformung aushärtet und die Form endgültig fixiert. Das Fertigteilgewicht läßt sich durch Zugabe eines Treibmittelsystems zu diesen Werkstoffen und somit geschäumten Materialien deutlich reduzieren.

Die Haftung zwischen diesen Werkstoffen und den Naturfasern läßt sich durch Einsatz von Haftvermittlern verbessern. Die Recyclingfasern können durch Zugabe von anderen Naturfasern wie Flachs, Hanf, Sisal, Ramie, Kenaf usw. in ihrem Eigenschaftsbild variiert werden.

Die Dekorstoffe werden entweder direkt mit in das Produktionswerkzeug eingelegt und bei dem Verformungsvorgang mit dem Trägerwerkstoff verbunden oder in einem an den Verformungsvorgang anschließenden Verfahrensschritt aufgebracht. Hierbei kann das Dekormaterial aus Folie, Teppich, Textil, Leder, Kunstleder oder Echtholz gebildet sein. Bei einer bevorzugten Ausführung ist das Dekormaterial aus Fasern von Einjahrespflanzen gebildet. Die Rohdichte der erfindungsgemäßen Bauteile beträgt 10 kg/m³ bis 75 kg/m³.

Nach dem erfindungsgemäßen Verfahren zur Herstellung werden alte Jute- oder Sisalsäcke oder Alttextilien in rechteckige, vorzugsweise quadratische Stücke von schütt- und/oder fließfähiger Konsistenz vorzerkleinert und diese Stücke in einer Mühle zerfasert und anschließend diese Fasern mit einem Bindemittel und/oder mit Thermofasern vermischt bzw. vernadelt, wobei aus dem gewonnenen Konglomerat Vliese oder Matten hergestellt werden, die zum Aufschmelzen der Thermofasern und/oder zum Trocken und/oder zum Aushärten bzw. Verfestigen des Bindemittels erhitzt werden. In Ausgestaltung der Erfindung erfolgt die Vorzerkleinerung durch Trenn- und Schneidwerkzeuge, vorzugsweise durch zwei im rechten Winkel zueinander angeordnete Furnierschneider, Guillotinen, Sichelhäcksler oder Messermühlen bzw. Granulatoren, wobei zweckmäßigerweise die Vorzerkleinerung durch eine Schneidmaschine erfolgt, die mit mindestens einem durchgehenden Quermesser ausgerüstet ist und zusätzlich eine Reihe von Längsmessern besitzt. Die Zerfaserung kann durch Mühlen erfolgen, die durch Prall, Reibung oder Scherung zerfasern. Besonders vorteilhaft ist die Zerfaserung mit einer Hammermühle. Vorteilhafterweise wird das zerkleinerte Material in einem Zwischenschritt angefeuchtet. Nach einem weiteren Verfahrensschritt der Erfindung wird beim Zerfasern in einer Mühle gleichzeitig pulverförmiger oder hochviskoser Klebstoff auf die Fasern aufgebracht, wobei die Beleimung der Fasern durch Zerstäubung des Bindemittels erfolgen kann. Nach der Zerfaserung können bis zu 20 Gewichtsprozente Thermofasern beigemischt werden. Die Aussonderung von Fremdstoffen erfolgt zweckmäßigerweise nach der Vorzerkleinerung bzw. der Zerfaserung. Es besteht die Möglichkeit, die Abdeckungen der äußeren Sichtseiten mit Durchbrechungen zu versehen.

## Patentansprüche

1. Verbundbauteil, insbesondere Verbundverkleidungsteil, unter Verwendung eines Bindewerkstoffs mit einem Verstärkungsmaterial aus Naturfasern, dadurch gekennzeichnet, daß das Verstärkungsmaterial ganz oder teilweise aus recycelten Naturfasern, die insbesondere aus Jute- oder Sisalfasern bestehen, gebildet ist.

2. Verbundbauteil nach Anspruch 1, dadurch gekennzeichnet, daß die Jute- oder Sisalfasern aus Transportgeweben gebildet sind.

3. Verbundbauteil nach Anspruch 1 oder 2, dadurch gekennzeichnet, daß der Anteil an Naturfasern zwischen 10 % und 90 % liegt.

4. Verbundbauteil nach einem der Ansprüche 1 bis 3, dadurch gekennzeichnet, daß den Recyclingfasern zwischen 10 % und 30 % andere Faserwerkstoffe oder Füllstoffe zugemischt sind.

5. Verbundbauteil nach einem der Ansprüche 1 bis 4, dadurch gekennzeichnet, daß das Verstärkungsmaterial ungerichtet, wirr, gerichtet, geformt oder vorverformt einbringbar ist.

6. Verbundbauteil nach Anspruch 5, dadurch gekennzeichnet, daß das Verstärkungsmaterial in Form eines Gewebes oder Vlieses einbringbar ist.

7. Verbundbauteil nach einem der Ansprüche 1 bis 6, dadurch gekennzeichnet, daß der Verbundbauteil im Spritzgießverfahren oder Preßverfahren hergestellt ist.

8. Verbundbauteil nach einem der Ansprüche 1 bis 7, dadurch gekennzeichnet, daß der Bindestoff aus thermoplastischen synthetischen Rohstoffen gebildet ist.

9. Verbundbauteil nach einem der Ansprüche 1 bis 7, dadurch gekennzeichnet, daß der Bindestoff aus einem Duroplast gebildet ist.

10. Verbundbauteil nach Anspruch 8 und 9, dadurch gekennzeichnet, daß der Bindestoff ais einer Kombination von Duroplasten und Thermoplasten gebildet ist.

11. Verbundbauteil nach nach einem der Ansprüche 8 bis 10, dadurch gekennzeichnet, daß ein träge reagierender Duroplast eingesetzt ist, der erst nach erfolgter Verformung aushärtet.

12. Verbundbauteil nach einem der Ansprüche 1 bis 7, dadurch gekennzeichnet, daß der Bindestoff aus einem biologischen Werkstoff gebildet ist.

13. Verbundbauteil nach einem der Ansprüche 1 bis 12, dadurch gekennzeichnet, daß das Verstärkungsmaterial schichtweise aufgebracht ist und aus Schichten aus kurzen Verstärkungsfasern, vorzugsweise mit einer Länge von 2 mm bis 10 mm, und langen Verstärkungsfasern, vorzugsweise mit einer Länge von 10 mm bis 100 mm, gebildet ist.

14. Verbundbauteil nach einem der Ansprüche 1 bis 13, dadurch gekennzeichnet, daß mindestens eine Schicht Schaumstruktur aufweist.

15. Verbundbauteil nach einem der Ansprüche 1 bis 14, dadurch gekennzeichnet, daß mindestens eine äußere Sichtseite mit einem Dekormaterial versehen ist.

16. Verbundbauteil nach Anspruch 15, dadurch gekennzeichnet, daß das Dekormaterial aus Folie, Teppich, Textil, Leder, Kunstleder oder Echtholz gebildet ist.

17. Verbundbauteil nach Anspruch 15, dadurch gekennzeichnet, daß das Dekormaterial aus Fasern von Einjahrespflanzen gebildet ist.

18. Verbundbauteil nach einem der Ansprüche 1 bis 17, dadurch gekennzeichnet, daß das zur Dekorseite liegende Verstärkungsmaterial aus Kurzfasern, vorzugsweise mit einer Länge von 2 mm bis 10 mm, und die anschließende Schicht aus gerichteten oder ungerichteten Langfasern, vorzugsweise mit einer Länge von 10 mm bis 100 mm, gebildet ist.

19. Verbundbauteil nach einem der Ansprüche 1 bis 18, dadurch gekennzeichnet, daß zur Verbesserung der Haftung zwischen den Materialien Haftvermittler eingesetzt sind.

20. Verbundbauteil nach einem der Ansprüche 1 bis 19, gekennzeichnet durch eine Rohdichte von 10 kg/m³ bis zu 75 kg/m³.

21. Verfahren zur Herstellung von Bauteilen nach einem der Ansprüche 1 bis 20, dadurch gekennzeichnet, daß die aus Jute- oder Sisalfasern bestehenden Transportgewebe oder Alttextilien in rechteckige, vorzugsweise quadratische Stücke von schütt- und/oder fließfähiger Konsistenz vorzerkleinert und diese Stücke in einer Mühle zerfasert und anschließend diese Fasern mit einem Bindemittel und/oder mit Thermofasern vermischt bzw. vernadelt werden, wobei aus dem gewonnenen Konglomerat Vliese oder Matten hergestellt werden, die zum Aufschmelzen der Thermofasern und/oder zum Trocknen und/oder zum Aushärten bzw. Verfestigen des Bindemittels erhitzt werden.

22. Verfahren nach Anspruch 21, dadurch gekennzeichnet, daß die Vorzerkleinerung durch Trenn- und Schneidwerkzeuge erfolgt, vorzugsweise durch zwei im rechten Winkel zueinander angeordnete Furnierschneider, Guillotinen, Sichelhäcksler oder Messermühlen bzw. Granulatoren.

23. Verfahren nach Anspruch 21 oder 22, dadurch gekennzeichnet, daß die Vorzerkleinerung durch eine Schneidemaschine erfolgt, die mit mindestens einem durchgehenden Quermesser ausgerüstet ist und zusätzlich eine Reihe von Längsmessern besitzt.

24. Verfahren nach einem der Ansprüche 21 bis 23, dadurch gekennzeichnet, daß die Zerfaserung durch Mühlen erfolgt, die durch Prall zerfasern.

25. Verfahren nach einem der Ansprüche 21 bis 23, dadurch gekennzeichnet, daß die Zerfaserung durch Mühlen erfolgt, die durch Reibung oder Scherung zerfasern.

26. Verfahren nach einem der Ansprüche 21 bis 23, dadurch gekennzeichnet, daß die Zerfaserung mit einer Hammermühle erfolgt.

27. Verfahren nach einem der Ansprüche 21 bis 26, dadurch gekennzeichnet, daß das zerkleinerte Material in einem Zwischenschritt angefeuchtet wird.

28. Verfahren nach einem der Ansprüche 21 bis 27, dadurch gekennzeichnet, daß beim Zerfasern in einer Mühle gleichzeitig pulverförmiger oder hochviskoser Klebstoff auf die Fasern aufgebracht wird.

29. Verfahren nach einem der Ansprüche 21 bis 28, dadurch gekennzeichnet, daß die Beleimung der Fasern durch Zerstäubung des Bindemittels erfolgt.

30. Verfahren nach einem der Ansprüche 21 bis 29, dadurch gekennzeichnet, daß nach der Zerfaserung bis zu 20 % Gewichtsprozente Thermofasern beigemischt werden.

31. Verfahren nach einem der Ansprüche 21 bis 30, dadurch gekennzeichnet, daß nach der Vorzerkleinerung bzw. der Zerfaserung eine Aussonderung von Fremdstoffen durchgeführt wird.

32. Verfahren nach einem der Ansprüche 21 bis 31, dadurch gekennzeichnet, daß die Abdeckungen der äußeren Sichtseiten mit Durchbrechungen versehen werden.
